# EUROPEAN PATENT SPECIFICATION

(11) **EP 3 890 531 B1**
(45) Date of publication and mention of the grant of the patent: **21.10.2026**
(21) Application number: 19813864.6
(22) Date of filing: 06.12.2019
(51) Int. Cl.: A24F 40/46, A24F 40/10

(54) **AN ATOMISER AND AN AEROSOL-GENERATING SYSTEM COMPRISING AN ATOMISER**
ZERSTÄUBER UND AEROSOLERZEUGUNGSSYSTEM MIT EINEM ZERSTÄUBER
ATOMISEUR ET SYSTÈME DE GÉNÉRATION D'AÉROSOL COMPRENANT UN ATOMISEUR

(30) Priority: 07.12.2018 EP 18211165
(43) Date of publication of application: 13.10.2021
(73) Proprietor: Philip Morris Products S.A., 2000 Neuchâtel (CH)
(72) Inventor: SAYGILI, Ali Murat, 2000 Neuchâtel (CH)
(74) Representative: Reddie & Grose LLP
(86) International application number: PCT/EP2019/084095
(87) International publication number: WO 2020/115322

(56) References cited:
- WO-A1-2015/117702
- WO-A1-2017/207195
- WO-A1-2018/041063
- US-A1- 2015 027 459
- US-A1- 2017 303 588

## Description

The invention relates to electrically heated aerosol-generating systems. In particular the invention relates to heated aerosol-generating systems that produce an aerosol for user inhalation that are compact and simple to manufacture but provide efficient aerosol production.

One type of aerosol-generating system is an electrically heated smoking system that generates an aerosol for a user to inhale. Electrically heated smoking systems come in various forms. One popular type of electrically smoking system is an e-cigarette that vapourises a liquid substrate to form an aerosol. The earliest designs of e-cigarette used a coil heater wrapped around a wick. A more recent design uses a mesh heating element, the mesh heating element allowing vapourised substrate to pass through the mesh.

WO2015/117702A describes an aerosol-generating system that heats a liquid substrate to form an aerosol. The heating is accomplished using a mesh of heating filaments. The liquid is conveyed to the mesh from a liquid reservoir by a capillary material on one side of the mesh. An airflow channel is on the other side of the mesh. Vaporised liquid aerosol-forming substrate passes through the mesh into the airflow channel.

WO2018/041063A discloses an atomizer which includes an atomizing assembly comprising a mounting seat, a liquid absorbing member and a heat-generating member. The liquid absorbing member and the heating-generating member are detachably mounted on the mounting portion.

WO2017/207195A discloses a cartridge for an aerosol-generating system, the cartridge comprising a liquid storage portion comprising a housing holding a liquid aerosol-forming substrate. The housing has a first and a second opening. The cartridge further comprises a first and a second permeable heater assembly, wherein the first heater assembly is fixed to the housing and extends across the first opening of the housing, and the second heater assembly is fixed to the housing and extends across the second opening of the housing. The first and second permeable heater assemblies are arranged opposite each other such that they face each other and form an airflow channel in between each other.

However the current mesh heating element designs are relatively bulky and complex to manufacture. Consumers have been found to prefer more compact devices, closer in size to a conventional cigarette. It would be desirable to provide a robust and compact aerosol-generating device that is simple to manufacture but that is still able to produce sufficient aerosol volume to satisfy users.

In a first aspect there is provided an atomiser for an electrically heated aerosol-generating system, wherein said atomiser is defined in appended claim 1 and comprises:
an atomiser housing defining an air inlet and an air outlet,
a reservoir portion for containing an aerosol-forming substrate in a condensed form,
an airflow passage extending in a longitudinal direction between the air inlet and the air outlet, the atomiser housing defining the reservoir portion and the airflow passage, and
a planar fluid-permeable heating element positioned between the airflow passage and the reservoir so that one side of the planar fluid-permeable heating element is in fluidic communication with the airflow passage and an opposite side of the planar fluid-permeable heating element is in fluidic communication with liquid in the reservoir, wherein the planar fluid-permeable heating element extends in the longitudinal direction; and a heater mounting portion on which the planar fluid-permeable heating element is supported, the heater mounting portion being received in the atomiser housing and positioned between the reservoir and the airflow passage so that fluid can pass from the reservoir to the airflow passage through the planar fluid-permeable heating element; wherein the heater mounting portion is press fit to the atomiser housing to partition the reservoir from the airflow passage.

At least a portion of the airflow passage may be defined between the planar fluid-permeable heating element and the atomiser housing.

In this context, a condensed form means a liquid, solid, gel or other non-gaseous form. In some embodiments the aerosol-forming substrate comprises a liquid mixture.

In this context, planar means extending in two dimension a substantially more than in a third dimension. In particular, the planar fluid permeable heating element extends in length and width directions substantially more than in a thickness direction. The planar fluid permeable heating element may have a length and a width at least 5 times greater than its thickness. The length of the planar fluid-permeable heating element may be parallel to the longitudinal direction. The planar fluid-permeable heating element is preferably flat.

The atomiser housing may have a length, a width and a thickness and may have a thickness significantly smaller than its length and width. The thickness direction of the atomiser housing may be the same as the thickness direction of the heating element.

The arrangement of this aspect of the invention has an advantage of allowing an atomiser with a small size to be made for a given size of heating element. In particular, the atomiser can be made thin in one dimension, allowing the atomiser and potentially the entire aerosol-generating system, to fit easily into the pocket of a user. This is popular with users.

The aerosol-forming substrate may be a liquid a room temperature. The aerosol-forming substrate may be a solid at room temperature, or may be in another condensed form, such as a gel, at room temperature.

Heating of the aerosol-forming substrate by the heating element may release volatile compounds from the aerosol-forming substrate as a vapour. The vapour may then cool within the airflow passage to form an aerosol.

The heating element may be configured to operate by resistive heating. In other words, the heating element may be configured to generate heat when an electrical current is passed though the heating element.

The heating element may be configured to operate by inductive heating. In other words, the heating element may comprise a susceptor that, in operation, is heated by eddy currents induced in the susceptor. Hysteresis losses may also contribute to the inductive heating.

The heating element may be arranged to heat the aerosol-forming substrate by conduction. The heating element may be in fluidic communication, e.g., direct or indirect contact, with the aerosol-forming substrate.

The heating element is fluid permeable. The heating element may permit vapour from the aerosol-forming substrate to pass through the heating element and into the airflow passage. One side of the heating element may be in fluidic communication with the airflow passage and an opposite side of the heating element may be in fluidic communication with the aerosol-forming substrate.

The heating element may be a mesh, perforated plate or perforated foil.

The heating element may comprise a mesh formed from a plurality of electrically conductive filaments. The electrically conductive filaments may define interstices between the filaments and the interstices may have a width of between 10 µm and 100 µm. Preferably the filaments give rise to capillary action in the interstices, so that in use, liquid aerosol-forming substrate to be vaporised is drawn into the interstices, increasing the contact area between the heater assembly and the liquid.

The electrically conductive filaments may form a mesh of size between 160 and 600 Mesh US (+/- 10%) (i.e. between 160 and 600 filaments per inch (+/- 10%)). The width of the interstices is preferably between 75 µm and 25 µm. The percentage of open area of the mesh, which is the ration of the area of the interstices to the total area of the mesh is preferably between 25% and 56%. The mesh may be formed using different types of weave or lattice structures. Alternatively, the electrically conductive filaments consist of an array of filaments arranged parallel to one another.

The electrically conductive filaments may have a diameter of between 8 µm and 100 µm, preferably between 8 µm and 50 µm, and more preferably between 8 µm and 39 µm.

The area of the mesh, array or fabric of electrically conductive filaments may be between 10 and 100 mm², e.g., between 10 and 30 mm², or, e.g., between 30 and 100 mm². The mesh, array or fabric of electrically conductive filaments may, for example, be rectangular and have dimensions of 10 mm by 5 mm.

The electrically conductive filaments may comprise any suitable electrically conductive material. Suitable materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, constantan, nickel-, cobalt-, chromium-, aluminium-titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetal^{®}, iron-aluminium based alloys and iron-manganese-aluminium based alloys. Timetal^{®} is a registered trade mark of Titanium Metals Corporation. The filaments may be coated with one or more insulators. Preferred materials for the electrically conductive filaments are 304, 316, 304L, and 316L stainless steel, and graphite.

The electrical resistance of the mesh, array or fabric of electrically conductive filaments of the heater element is preferably between 0.3 and 4 Ohms. More preferably, the electrical resistance of the mesh, array or fabric of electrically conductive filaments is between 0.3 and 3 Ohms, and more preferably between about 0.5 and 1 Ohm, or about 0.55 Ohm.

The atomiser may comprise electrical contact portions fixed to the heating element. Electrical current may be passed to and from the heating element through the electrical contact portions. The electrical resistance of the mesh, array or fabric of electrically conductive filaments is preferably at least an order of magnitude, and more preferably at least two orders of magnitude, greater than the electrical resistance of the electrical contact portions. This ensures that heat is generated by the heating element and not by the electrical contacts.

The atomiser comprises a heater mounting portion on which the planar fluid-permeable heating element is supported, the heater mounting portion being received in the atomiser housing and positioned between the reservoir and the airflow passage so that fluid can pass from the reservoir to the airflow passage through the planar fluid-permeable heating element. The fluid may pass from the reservoir to the airflow passage in a thickness direction of the planar fluid-permeable heating element. The heater mounting portion may support the electrical contact portions.

The heater mounting portion is press fit to the atomiser housing to partition the reservoir portion from the airflow passage. The heater mounting portion may comprise an end face that supports the planar fluid-permeable heating element and at least one sidewall extending from the end face. The at least one sidewall and end face may together may provide an open ended cavity. The open ended cavity may form all or part of the reservoir portion.

The heater mounting portion may be press fit to the atomiser housing in a direction orthogonal to the longitudinal axis. The at least one sidewall of the heater mounting portion may engage the atomiser housing to provide a liquid tight seal.

The atomiser may comprise a plurality of electrical contact elements positioned at an air inlet end of the atomiser and accessible from an exterior of the atomiser housing, the electrical contact elements being electrically connected or connectable to the planar fluid-permeable heating element.

The atomiser housing may comprise a bore through which the heater mounting portion can pass. The atomiser housing may comprise a lid configured to seal the bore. The lid may be press fit to the bore to provide an airtight seal with the bore. In operation, the lid may be depressed by a user to ensure electrical connection of at least one electrical contact portion with a corresponding electrical contact element.

The aerosol-forming substrate chamber may comprise a capillary material or other liquid retention material configured to ensure a supply of aerosol-forming substrate to the heating element. The capillary material or other liquid retention material may be held within the heater mount.

The capillary material may have a fibrous or spongy structure. The capillary material preferably comprises a bundle of capillaries. For example, the capillary material may comprise a plurality of fibres or threads or other fine bore tubes. The fibres or threads may be generally aligned to convey liquid to the heater. Alternatively, the capillary material may comprise sponge-like or foam-like material. The structure of the capillary material forms a plurality of small bores or tubes, through which the liquid can be transported by capillary action. The capillary material may comprise any suitable material or combination of materials. Examples of suitable materials are a sponge or foam material, ceramic- or graphite-based materials in the form of fibres or sintered powders, foamed metal or plastics material, a fibrous material, for example made of spun or extruded fibres, such as cellulose acetate, polyester, or bonded polyolefin, polyethylene, terylene or polypropylene fibres, nylon fibres or ceramic.

The capillary material may be in fluidic communication, e.g., direct or indirect contact, with the electrically conductive filaments of the heating element. The capillary material may extend into interstices between the filaments. The heating element may draw liquid aerosol-forming substrate into the interstices by capillary action.

The housing may contain two or more different capillary materials, wherein a first capillary material, in contact with the heating element, has a higher thermal decomposition temperature and a second capillary material, in contact with the first capillary material but not in contact with the heating element has a lower thermal decomposition temperature. The first capillary material effectively acts as a spacer separating the heating element from the second capillary material, so that the second capillary material is not exposed to temperatures above its thermal decomposition temperature. As used herein, "thermal decomposition temperature" means the temperature at which a material begins to decompose and lose mass by generation of gaseous by products. The second capillary material may advantageously occupy a greater volume than the first capillary material and may hold more aerosol-forming substrate that the first capillary material. The second capillary material may have superior wicking performance to the first capillary material. The second capillary material may be a less expensive or have a higher filling capability than the first capillary material. The second capillary material may be polypropylene.

The atomiser may be refillable with aerosol forming-substrate. A reservoir refilling port may be provided in the atomiser housing or external housing. The reservoir filling port may be closed by a reservoir cap. The reservoir portion may have a capacity of around 1 mL. The aerosol-forming substrate may be a liquid at room temperature. The aerosol-forming substrate may be a gel or may be solid at room temperature. The aerosol-forming substrate may be provided in the form of a capsule or tablet, or may be provided in a particulate form.

The aerosol-forming substrate is a substrate capable of releasing volatile compounds that can form an aerosol. The volatile compounds may be released by heating the aerosol-forming substrate.

The aerosol-forming substrate may comprise plant-based material. The aerosol-forming substrate may comprise tobacco. The aerosol-forming substrate may comprise a tobacco-containing material containing volatile tobacco flavour compounds, which are released from the aerosol-forming substrate upon heating. The aerosol-forming substrate may alternatively comprise a non-tobacco-containing material. The aerosol-forming substrate may comprise homogenised plant-based material. The aerosol-forming substrate may comprise homogenised tobacco material. The aerosol-forming substrate may comprise at least one aerosol-former. An aerosol-former is any suitable known compound or mixture of compounds that, in use, facilitates formation of a dense and stable aerosol and that is substantially resistant to thermal degradation at the operating temperature of operation of the system. Suitable aerosol-formers are well known in the art and include, but are not limited to: polyhydric alcohols, such as triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as triethylene glycol, 1,3-butanediol and, most preferred, glycerine. The aerosol-forming substrate may comprise other additives and ingredients, such as flavourants and water.

The atomiser housing may be a one-piece component. In particular, the atomiser housing may be a one-piece moulding. This allows for simple assembly of the system. The atomiser may comprise an external housing. The atomiser housing may be press fit or snap fit to the external housing, the atomiser housing and external housing together enclosing a reservoir for containing an aerosol-forming substrate. The atomiser housing may be press fit or snap fit to the external housing in the longitudinal direction. This allows for an external housing that is smooth and continuous.

The external housing may comprise a mouthpiece which, in use, is placed in a user's mouth. The user may puff on the mouthpiece to draw aerosol generated by the atomiser out through the mouthpiece. The mouthpiece may be at an opposite end of the atomiser, in a longitudinal direction to an exposed part of the electrical contact elements. A replaceable mouthpiece element may be placed over the mouthpiece of the external housing. The replaceable mouthpiece may be made from a softer material than the external housing.

The airflow passage may extend in a straight line between the air inlet and the air outlet. This allows for a simple construction and assembly and reduces the likelihood of condensates collecting at particular locations within the airflow path. Furthermore, a straight airflow path minimises turbulence in the vicinity of the heating element, resulting in a homogenous aerosol with consistent droplet size.

The atomiser may have a rectangular cross-section orthogonal to the longitudinal direction. This may allow the atomiser to be easily held and manipulated by a user.

The planar fluid permeable heating element may be elongate and have a length and width and a thickness, the length being in the longitudinal direction and being greater than the width, and the width being greater than the thickness. Having a heating element that is elongate in the longitudinal direction of the atomiser allows for a heating element with a relatively large surface area to be accommodated within a slim atomiser. A large surface area for the heating element allows for a relatively large volume of aerosol to be generated.

The atomiser may form part of a cartridge, the cartridge containing the aerosol-forming substrate. Alternatively, a cartridge containing aerosol-forming substrate may be provided as a separate component to the atomiser.

In a second aspect, there is provided an electrically heated aerosol-generating system, comprising:
an atomiser according to the first aspect, and a device portion,
wherein the device portion comprises a power supply and control circuitry connected to the power supply, and is engaged with the atomiser to allow for a supply of power from the power supply to the planar fluid-permeable heating element.

The device portion may have a longitudinal axis aligned with the longitudinal direction.

The system may comprise a mouthpiece on which a user can puff to draw aerosol or vapour generated by the atomiser through the air outlet. The mouthpiece may be integral with the atomiser of may be provided as a separate component.

The device portion may be configured to supply power to the heating element according to a particular heating strategy. The control circuitry may include a puff sensor configured to detect user puffs on the system. The control circuitry may be configured to control the supply of power to the heating element dependent on an output from the puff sensor. The control circuitry may be configured to supply power to the heating element following detection of a user puff. The control circuitry may be configured to supply power to the heating element for a predetermined time period following detection of each user puff.

The device portion, and in particular the control circuitry, may be configured to supply a first, non-zero, power to the heating element, or to supply a power sufficient to maintain the heating element at a first temperature or within a first temperature range, between user puffs. The device portion, and in particular the control circuitry, may be configured to supply a second power to the heating element during user puffs, wherein the second power is greater than the first power.

The provision of power to the heating element between user puffs can advantageously increase the volume of aerosol produced by the system. In combination with a heating element having a relatively large surface area, this allows for high volumes of aerosol to be produced in a compact device, and at moderate temperatures for the heating element.

The control circuitry may comprise a microprocessor, which may be a programmable microprocessor, a microcontroller, or an application specific integrated chip (ASIC) or other electronic circuitry capable of providing control. The control circuitry may comprise further electronic components. The control circuitry may be configured to regulate a supply of power to the heating element. Power may be supplied to the heating element continuously following activation of the system or may be supplied intermittently, such as on a puff by puff basis. The power may be supplied to the heating element in the form of pulses of electrical current.

The system may be an electrically heated smoking system. The system may be a nicotine delivery system. The reservoir portion may contain an aerosol-forming substrate comprising nicotine.

The system may be a handheld aerosol-generating system. The aerosol-generating system may have a size comparable to a conventional cigar or cigarette. The smoking system may have a total length between approximately 30 mm and approximately 150 mm. The smoking system may have a width between approximately 10mm and 50mm. The smoking system may have a thickness between approximately 3 mm and approximately 10mm.

The power supply may be a battery such as a lithium iron phosphate battery. As an alternative, the power supply may be another form of charge storage device such as a capacitor. The power supply may require recharging and may have a capacity that allows for the storage of enough energy for one or more smoking experiences. For example, the power supply may have sufficient capacity to allow for the continuous generation of aerosol for a period of around six minutes, corresponding to the typical time taken to smoke a conventional cigarette, or for a period that is a multiple of six minutes. In another example, the power supply may have sufficient capacity to allow for a predetermined number of puffs or discrete activations of the heater.

In a fourth aspect, there is provided an electrically heated aerosol-generating system according to appended claim 19, on which a user can puff to withdraw an aerosol, comprising:
an atomiser, and a device portion,
wherein the atomiser comprises:
   an atomiser housing defining an air inlet and an air outlet,
   a reservoir portion for containing a liquid aerosol-forming substrate,
   an airflow passage extending in a longitudinal direction between the air inlet and the air outlet, and
   a planar fluid-permeable heating element positioned between the airflow passage and the reservoir so that one side of the planar fluid-permeable heating element is in fluidic communication, e.g., direct or indirect contact, with the airflow passage and an opposite side of the planar fluid-permeable heating element is in fluidic communication, e.g., direct or indirect contact, with liquid in the reservoir, wherein the planar fluid permeable heating element is elongate and has a length and width and a thickness, the length being in the longitudinal direction and being greater than the width, and the width being greater than the thickness; and
   wherein the device portion comprises a power supply and control circuitry connected to the power supply, and is engaged with the atomiser to allow for a supply of power from the power supply to the planar fluid permeable heating element, and wherein device portion is configured to supply power to the heating element to supply a first power to the heating element, or to supply a power sufficient to maintain at least the heating element at a first temperature or within a first temperature range, between user puffs, wherein the heater mounting portion is press fit to the atomiser housing to partition the reservoir portion from the airflow passage.

The device portion may be configured to supply a second power to the heating element during user puffs, wherein the second power is greater than the first power.

The system may further comprise control circuitry connected to the heater element and to an electrical power source, the control circuitry configured to monitor the electrical resistance of the heating element or of one or more filaments of the heating element, and to control the supply of power to the heating element from the power source dependent on the electrical resistance of the heating element or specifically the electrical resistance of the one or more filaments.

The control circuitry may comprise a microprocessor, which may be a programmable microprocessor, a microcontroller, or an application specific integrated chip (ASIC) or other electronic circuitry capable of providing control. The control circuitry may comprise further electronic components. The control circuitry may be configured to regulate a supply of power to the heating element. Power may be supplied to the heating element continuously following activation of the system or may be supplied intermittently, such as on a puff by puff basis. The power may be supplied to the heating element in the form of pulses of electrical current.

The power supply may be a battery such as a lithium iron phosphate battery, within the main body of the housing. As an alternative, the power supply may be another form of charge storage device such as a capacitor. The power supply may require recharging and may have a capacity that allows for the storage of enough energy for one or more smoking experiences. For example, the power supply may have sufficient capacity to allow for the continuous generation of aerosol for a period of around six minutes, corresponding to the typical time taken to smoke a conventional cigarette, or for a period that is a multiple of six minutes.

The system may be a handheld aerosol-generating system. The aerosol-generating system may have a size comparable to a conventional cigar or cigarette. The smoking system may have a total length between approximately 30 mm and approximately 150 mm. The smoking system may have a width between approximately 10mm and 50mm. The smoking system may have a thickness between approximately 3 mm and approximately 10mm.

In a fifth aspect of the invention, there is provided a cartridge for an aerosol-generating system according to appended claim 21.

The cartridge may further comprise a lid configured to be received in the bore and to cover the heater assembly. A portion of the airflow passage may be defined between the heating element and the lid. The lid may configured to function as a button. In particular, the cartridge may further comprise one or more electrical contact elements positioned between the heater assembly and the lid. The user may push on the lid to urge the electrical contact element into contact with the heater assembly. In operation, electrical power may be provided to the heater assembly through the electrical contact element. When electrical power is supplied to the heating element it may heat up sufficiently to vaporise volatile compounds in the aerosol-forming substrate, which subsequently form an aerosol. The heating element may be as described in relation to the first aspect.

The lid may be press fit to the cartridge housing to provide an airtight seal. The lid may be retained in the cartridge housing by a mechanical interlock or by a snap fit. The lid may be removable to allow for refilling of the cartridge with aerosol-forming substrate or to allow for replacement of the heater assembly. The cartridge housing may be an external housing, which, in use, is grasped by the user.

This arrangement provides for a simple construction for an intuitive user interface. The user must depress the lid to deliver power to the heating element, in order to produce an aerosol.

It should be clear that features described in relation to one aspect of the invention may be applied to other aspects of the invention. For example, a soft, replaceable mouthpiece element may be provided in each aspect of the invention.

The aspects of the invention described allow for the construction of an aerosol generating system that is compact and robust. In particular a system that is elongate and has a low profile in a thickness direction is possible. The system may produce a significant volume of aerosol, sufficient to satisfy users of electrical smoking systems. The system may be simply manufactured, using automated processes.

Embodiments of the invention will now be described, by way of example only, with reference to the accompanying drawings, in which:
Figure 1 is a schematic illustration of an aerosol-generating system in accordance with the invention;
Figure 2 is a cross-section through a cartridge in accordance with an embodiment of the disclosure;
Figure 3 is an exploded view of the cartridge of Figure 2;
Figure 4 is a perspective view of a cartridge in accordance with a second embodiment of the disclosure;
Figure 5a is a first cross-section through the cartridge of Figure 4;
Figure 5b is a second cross-section through the cartridge of Figure 4;
Figure 6 is a perspective view of a cartridge in accordance with a third embodiment of the disclosure;
Figure 7 is a perspective, partially transparent view of the cartridge of Figure 6;
Figure 8 is a cross-section through the cartridge of Figure 6; and
Figure 9 is an exploded view of the cartridge of Figure 6.

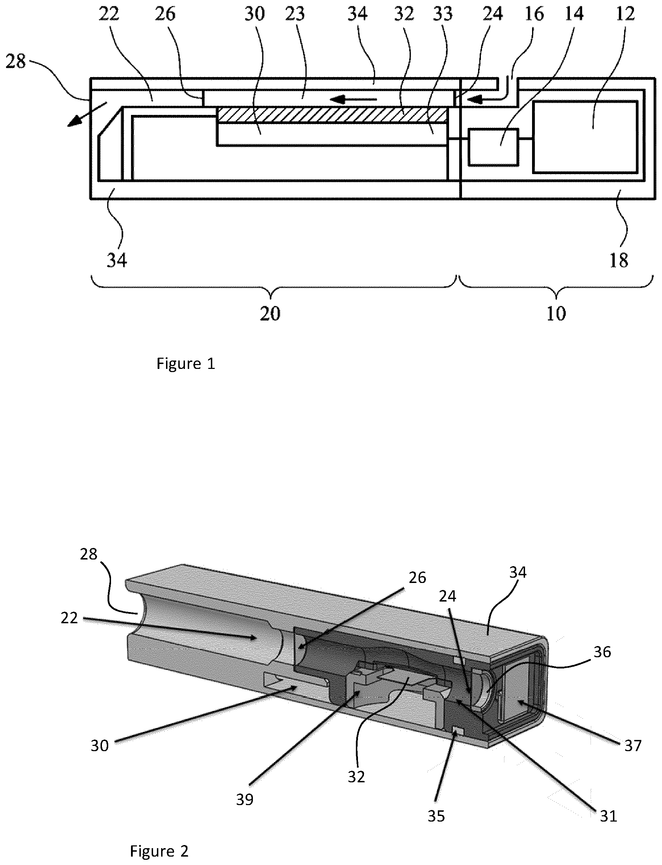

Figure 1 is a schematic illustration of an aerosol-generating system in accordance with the invention. The aerosol-generating system is a handheld smoking system configured to generate aerosol for user inhalation. In particular, the system shown in Figure 1 is a smoking system that generates an aerosol containing nicotine and flavour compounds.

The system of Figure 1 comprises two parts, a device portion 10 and a cartridge 20. In use the cartridge 20 is attached to the device portion 10.

The device portion 10 comprises a device housing 18 that holds a rechargeable battery 12 and electrical control circuitry 14. The rechargeable battery 12 is a lithium iron phosphate battery. The control circuitry 14 comprises a programmable microprocessor and an airflow sensor.

The cartridge 20 comprises a cartridge housing 34 that is attached to the device housing 18 by a snap-fit connection. The cartridge housing 34 holds an aerosol-generating element, which in this example is a heating element 32. The heating element 32 is a resistive heating element. Power is provided to the heating element from the battery 12, under the control of the control circuitry, as will be described. The cartridge also holds an aerosol-forming substrate within a substrate chamber 30. In this example, the aerosol-forming substrate is a liquid mixture at room temperature and comprises nicotine, flavours, an aerosol-former, such a glycerol or propylene glycol, and water. A capillary material 33 is provided in the substrate chamber 30 and is arranged to promote delivery of the aerosol-forming substrate to the heating element, regardless of the orientation of the system relative to gravity.

An airflow passage 22 is defined through the system. In this example, a portion of the airflow passage is through the cartridge 20 and a portion of the airflow passage is through the device portion 10. The airflow sensor included in the control circuitry is positioned to detect airflow through the portion of the airflow passage in the device portion. The airflow passage extends from an air inlet 16 to an air outlet 28. The air outlet 28 is in a mouthpiece end of the cartridge. When the user puffs on the mouthpiece end of the cartridge, air is drawn from the air inlet 16, through the airflow passage 22, to the air outlet 28.

Part of the airflow passage forms an atomising chamber 23. The heating element 32 is positioned in the atomising chamber. The heating element 32 is an elongate stainless steel mesh heating element. The heating element 32 is generally planar, with one side in fluidic communication, e.g., direct or indirect contact, with the liquid in the substrate chamber 30 and the opposite side in fluidic communication, e.g., direct or indirect contact, with the air passing through the atomising chamber 23. In operation, liquid aerosol-forming substrate heated by the heating element is vaporised to form a vapour. The vapour can pass through the mesh heating element into the atomising chamber. The vapour is entrained in the air flowing through the atomising chamber 23 and cools to form an aerosol before exiting the system through the air outlet 28. The heating element 32 is elongate in a direction parallel to the extent of the airflow passage.

An inlet filter 24 is provided in the airflow passage on an upstream side of the heating element. An outlet filter 26 is provided in the airflow passage on a downstream side of the heating element. In this context, upstream and downstream are defined by reference to the direction of airflow through the airflow passage 22 during use of the device in the intended manner. The atomisation chamber is positioned between the inlet filter and the outlet filter.

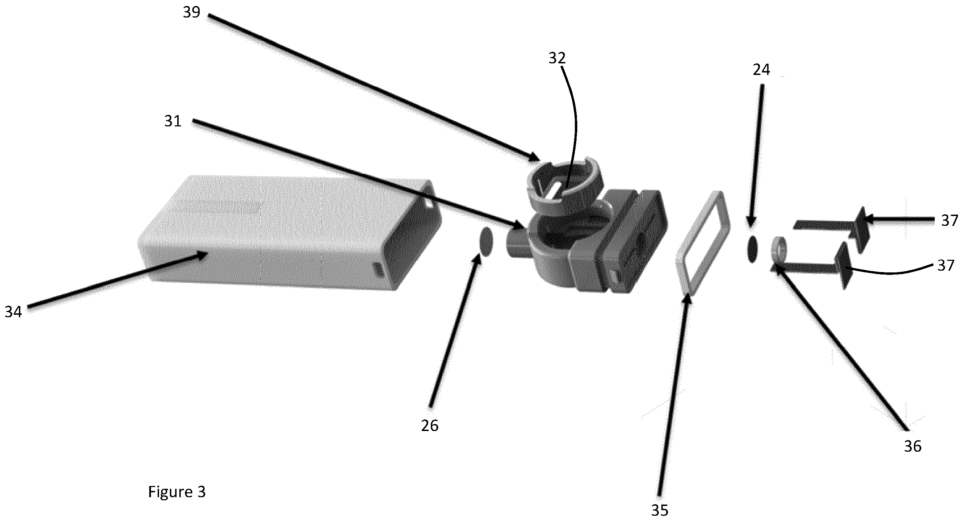

The inlet filter 24 comprises a mesh. The mesh prevents liquid droplets having a diameter greater than a particular diameter from leaving the atomisation chamber 23 through the air inlet 24. Similarly, the outlet filter 26 comprises a mesh. The outlet filter mesh prevents liquid droplets having a diameter greater than a particular diameter from leaving the atomisation chamber 23 through the air outlet 26. The mesh of the inlet filter may the same or different to the mesh of the outlet filter. A particular example is described in detail with reference to Figures 2 and 3.

The system, consisting in this example of a device portion and a cartridge, is elongate, having a length significantly greater than its width or its thickness. The mouthpiece end is at one end of the length of the system. This shape allows the system to be comfortably held by a user in a single hand when using the system. The length of the system may be said to extend in a longitudinal direction. The airflow passage extends in the longitudinal direction past the fluid permeable heating element 32. The fluid permeable heating element is generally planar and extends parallel to the longitudinal direction. The heating element may also be elongate, with its length extending in the longitudinal direction. This arrangement allows for a heating element with a relatively large surface area to be accommodated in a slim, easy to hold system.

In operation, the heating element may be activated only during user puffs or may be activated continuously following the device being switched on. In the first case, user puffs are detected when the flow sensor detects an airflow through the airflow passage above a threshold airflow rate. In response to the output of the flow sensor, the control circuitry supplies power to the heating element. The supply of power to the heating element may be provided for a predetermined period of time following detection of a user puff or may be controlled until a switch-off condition is met, based on signals from the flow sensor and/or based on other inputs received from by the control circuitry, such as measures of heating element temperature or resistance. In one example, the heating element is supplied with 6 Watts of power for 3 seconds following detection of a user puff. When the heating element is supplied with power it heats up. When it is sufficiently hot, the liquid aerosol-forming substrate in proximity to the heating element is vaporised.

In the second case, the heating element is supplied with power continuously during operation, following activation of the system. Activation may be based on a user input to the system, such as pressing a button. In one embodiment, the heating element is supplied with 3.3 Watts of power following activation of the device, regardless of user puffs. Again, this may be adjusted based on other inputs to the control circuitry, such as measured heating element temperature or resistance. The system may be switched off following a predetermined time after activation or based on a further user input.

The vapour generated passes through the mesh heating element into the atomisation chamber where it is entrained in the airflow through the airflow passage. The vapour cools within the airflow to form an aerosol. The aerosol passes through the outlet filter 26 and into the user's mouth.

The liquid that is vaporised by the heating element leaves the capillary material 33. This liquid is replaced by liquid still remaining in the substrate chamber 30, so that there is liquid proximate to the heating element ready for the next user puff.

It is possible that not all of the vaporised aerosol-forming substrate is drawn out of the system by the user puffs. In that case, the aerosol-forming substrate may condense to form large droplets within the atomising chamber 23. It may also be possible for some liquid to pass through the heating element without being vaporised, either during use or between uses of the system. The inlet filter 24 prevents any large droplets within the atomising chamber from escaping towards the air inlet 16. The inlet filter thus protects both the user and the electronic components and battery within the device portion from liquid leakage from the cartridge.

The outlet filter similarly prevents large liquid droplets escaping the atomising chamber towards the air outlet 28. Large droplets may provide an unpleasant experience for the user if they reach the user's mouth.

The inlet filter may comprise more than one layer of mesh. The layers may have different sizes. The inlet filter may comprise a finer mesh or meshes than the outlet filter because the outlet filter must allow the passage of some liquid droplets in the aerosol formed, whereas it is desirable to substantially prevent all liquid droplets passing to the air inlet, provided that the inlet filter allows sufficient air flow into the atomisation chamber from the air inlet.

Figure 2 is a perspective cross-section through a cartridge in accordance with one embodiment of the invention. Figure 3 shows the components of the cartridge of Figure 3 in exploded form.

The cartridge comprises an external housing 34. Within the external housing 34 is an internal housing 31, also referred to as the atomiser housing. The internal housing holds the heater assembly. The heater assembly comprises a heater mount 39 which supports the mesh heating element 32. A capillary material (not shown) is held within the heater mount 39, in fluidic communication, e.g., direct or indirect contact, with the heating element 32. The cartridge also comprises electrical contact elements 37 that extend between the mesh heating element and an external surface of the cartridge, at the device portion end of the cartridge (opposite the mouthpiece end). The electrical contact elements 37 interface with corresponding electrical contacts on a device portion of the system to allow for the supply of power to the heating element 32. An inlet filter 24 is clamped to the inlet end of the internal housing 31 by a clamping ring 36. An outlet filter 26 is clamped between the internal housing 31 and the external housing 34. The airflow passage is defined though the internal housing and the external housing and passes through both filters 24, 26. The internal housing defines the atomisation chamber. An elastomer sealing element 35 is provided to provide a liquid tight seal between the internal housing 31 and the external housing 34.

In this example, the inlet filter and the outlet filter 26 are formed from identical meshes. The mesh of the inlet filter is made of stainless steel wire having a diameter of about 50 µm. The apertures of the mesh have a diameter of about 100µm. The mesh is coated with silicon carbide.

The mesh of the heating element 32 is also formed from stainless steel and has a mesh size of about 400 Mesh US (about 400 filaments per inch). The filaments have a diameter of around 16 µm. The filaments forming the mesh define interstices between the filaments. The interstices in this example have a width of around 37 µm, although larger or smaller interstices may be used. Using a mesh of these approximate dimensions allows a meniscus of aerosol-forming substrate to be formed in the interstices, and for the mesh of the heater assembly to draw aerosol-forming substrate by capillary action. The open area of the heating element mesh, i.e. the ratio of the area of interstices to the total area of the mesh is advantageously between 25 and 56%. The total electrical resistance of the heater assembly is around 1 Ohm.

The internal housing and external housing may be formed from metal or robust plastics materials. Similarly the heater mount may be formed from a heat resistant plastics material.

The cartridge of Figures 2 and 3 is simple to assemble and is robust and inexpensive. The assembly of the internal housing 31, the heater assembly, the inlet filter 24, clamping ring 36, outlet filter 26 and sealing element 35 may be described as an atomiser assembly. The heater assembly is made first. The heater assembly is then pushed into a bore in the internal housing 31. The heater mount is push fit to the internal housing and forms a liquid tight seal with the internal housing 31. The remaining components of the atomiser assembly are then assembled. The atomiser assembly is then pushed into the external housing 34. A pair of protrusions on the internal housing snap into corresponding apertures on the external housing to secure the internal housing to the external housing. The chamber 30 holding the aerosol-forming substrate is defined by both the internal and external housings. The external housing 34 may contain the liquid (or another condensed phase) aerosol-forming substrate before the atomiser assembly is attached. Alternatively, the aerosol-forming substrate chamber may be filled after the atomiser assembly is attached to the external housing through a filling port (not shown) closed by a cap.

The cartridge of Figures 2 and 3 operates in the manner described in relation to Figure 1.

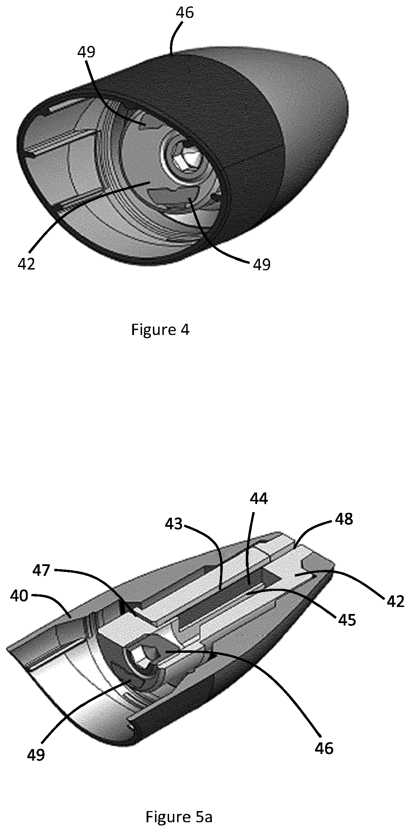

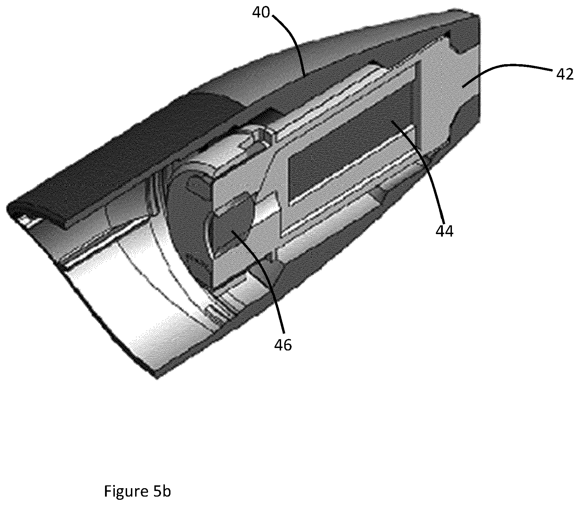

Figure 4 is a perspective view of a cartridge containing an atomiser in accordance with a second embodiment of the invention. Figure 5a is a first cross-section through the cartridge of Figure 4. Figure 5b is a second cross-section through the cartridge of Figure 4, orthogonal to the cross-section of Figure 5a.

The cartridge of Figure 4 comprises an external housing 40. Within the external housing 40 is an internal housing 42, also referred to as an atomiser housing. The interior of the cartridge is best seen in Figures 5a and 5b. The atomiser housing has an airflow passage 43 extending between an air inlet 47 and an air outlet 48. The air outlet 48 is at a mouthpiece end of the cartridge, and in use is place in a user's mouth. Inlet and outlet filters within the airflow passage are not included in this embodiment, but may be provided if desired.

The airflow passage passes a heating element 44. The heating element is a fluid-permeable stainless steel mesh, as described in relation to Figure 1. The heating element is elongate, with its longest dimension extending parallel to the airflow passage. This allows a heating element with a large surface area to be accommodated in a slim cartridge. In this embodiment the surface area of the mesh heating element is 67.5mm². Power is provided to the heating element through electrical contacts 49, which interface with corresponding contacts on device portion containing a power supply, as described with reference to Figure 1.

The atomiser housing also defines a reservoir 45 that contains a liquid aerosol-forming substrate, as previously described. The reservoir may contain a capillary material or other liquid retention material, such as glass fibre matting. The reservoir is refillable through a filling port that is sealed by a plug 46. The reservoir has a volume of around 1mL.

The cartridge of Figure 4 is suited to a continuous heating scheme in which power is supplied to the heating element both during and between user puffs. A hybrid power supply scheme is particularly advantageous, in which a lower power, such as 3.3 Watts is supplied to the heating element between user puffs but a higher power, such as 7 Watts, is supplied for 2 seconds following detection of each user puff. This results in a large volume of aerosol being generated without requiring the heating element to reach very high temperatures. This is advantageous both because it means that other components of the cartridge close to the heating element do not need to be able to withstand such high temperatures and because the generated aerosol does not need to cool very much before entering the user's mouth. Typically, with a continuous heating scheme, a challenge is to effectively dissipate heat to stop the housing or other components of the system getting too hot. A larger heating elements allows greater power to be user without excessive temperatures being the result. For example, a power of about 7 Watts can heat the heating element to a temperature of about 220 °C.

The cartridge of the second embodiment is robust and easy to assemble. The atomiser housing may be a single moulding. The atomiser housing may be moulded around the heating element and the electrical connections for the heating element.

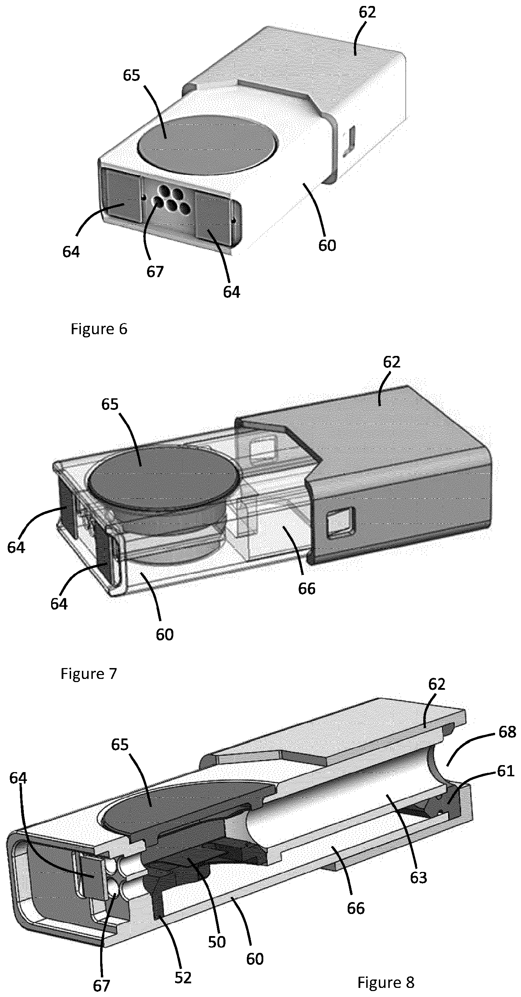

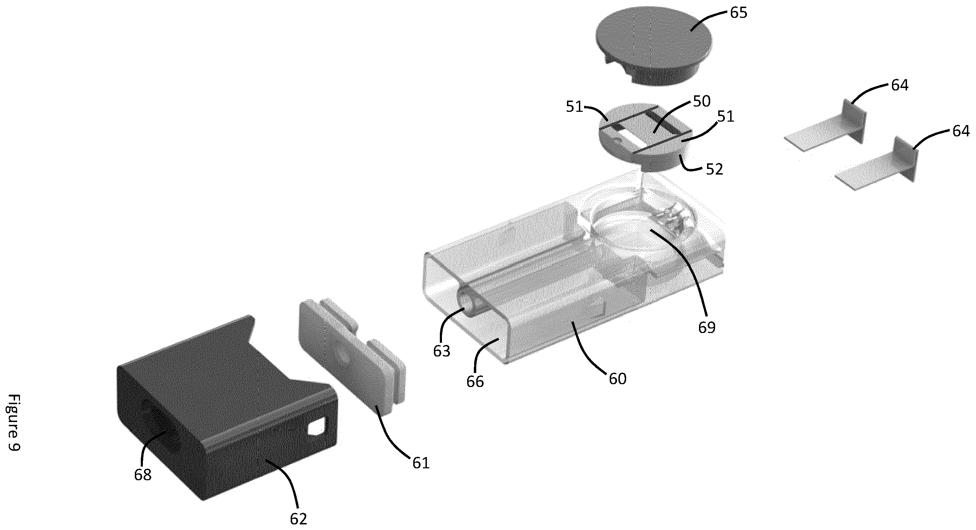

Figure 6 is a perspective view of a cartridge in accordance with a third embodiment of the disclosure. Figure 7 is a perspective, partially transparent view of the cartridge of Figure 6. Figure 8 is a cross-section through the cartridge of Figure 6 and Figure 9 is an exploded view of the cartridge of Figure 6.

The cartridge of Figure 6 comprises an external housing 62, forming a mouthpiece, and an atomiser housing 60. The atomiser housing is fixed to the external housing by a snap fitting. A pair of apertures on the external housing snap over a corresponding pair of protrusions on the atomiser housing.

As best illustrated in Figure 8, the atomiser housing has a plurality of air inlets 67 which communicate with an airflow passage 63 through the atomiser housing 60. An air outlet 68 is at the opposite end of the airflow passage to the air inlets.

The airflow passage passes a stainless steel mesh heating element of the type described with reference to Figures 2 and 3. The heating element is supported on a heater mount 52. The heater mount 52 is best seen in Figure 9. It is generally cylindrical with an end face that supports the heating element 50 and a sidewall extending downwards from the end face to define a cylindrical chamber beneath the heating element. The cylindrical chamber forms part of a reservoir 66 that holds a liquid aerosol-forming substrate. A capillary material, not shown, may be held within the cylindrical chamber to ensure a reliable supply of liquid to the heating element 50.

An elastomer sealing element 61 is clamped between the external housing 62 and the atomiser housing 60. The sealing element provides a liquid tight seal to prevent leakage of liquid aerosol-forming substrate from cartridge at the mouthpiece end.

On either side of the heating element, on the end face of the heater mount, there is a pair of electrical contact pads 51. These electrical contact pads 51 have a significantly lower electrical resistance than the heating element 50 and are positioned to directly or indirectly contact electrical contact elements 64.

The heater assembly, comprising heater mount, heating element and electrical contact pads, is received within a bore 69 in the atomiser housing. The heater mount is push fit to the atomiser housing and provides a liquid tight seal with the atomiser housing 60. If desired an additional sealing element may be provided, or the heater mount welded or adhered to the atomiser housing 60.

As best seen in Figure 7, electrical contact elements 64 comprise folded pieces of conductive ribbon, such as copper ribbon. One end of each electrical contact element 64 overlies an electrical contact pad on the heater assembly. An opposite end of each electrical contact element 64 is accessible from the exterior of the atomiser housing 60, at the air inlet end. As described in relation to the preceding embodiments, the electrical contact elements 64 interface with corresponding contacts on a deice portion of an aerosol generating system of the type shown in and described with reference to Figure 1.

A lid 65 is provided to cover the bore 69 and heating element. The lid can be press fit to the atomiser housing 60 and optionally can also function as a button. A portion of the airflow passage is defined between the heating element and the lid.

The reservoir may be refillable through the bore 69. Alternatively, a second bore or opening may be provided on an opposite side of the atomiser housing to allow for refilling of the reservoir. The second bore could be sealed by a removable cap.

In operation, the cartridge its attached device portion, as described with reference to Figure 1. In order to allow for the supply of power from the device portion to the heating element, the lid 65 can be used as a button that is pressed by a user to maintain electrical contact between the electrical contact pads 51 and the corresponding electrical contact elements 64. The electrical contact elements maybe biased away from the contact pads 51 and so, unless the lid is depressed to urge the contact elements 64 down onto the contact pads 51, no power can be delivered to the heating element. When a user wishes to generate an aerosol, they press down on the lid 61. At the same time they puff on the mouthpiece end of the cartridge to draw air through the airflow passage. The control circuitry in the device portion may be configured to provide power continuously to the electrical contact elements 64 once the device is activated. Power is then supplied to the heating element for as long as the use is pressing on the lid 61. The control circuitry may be configured to stop the supply of power after a predetermined period of power delivery to prevent overheating. The control circuitry may be configured to monitor the electrical resistance or temperature of the heating element and may stop the supply of power to prevent overheating.

The cartridge of the third embodiment, like the cartridges of the first and second embodiments, can be simply assembled, is robust and is inexpensive to manufacture. The atomiser housing and external housing can be moulded. The atomiser housing can be moulded as a single moulding. The heater assembly can be separately assembled and then push fit to the atomiser housing. The electrical contact elements can be adhered to the atomiser housing at the air inlet end. Inlet and outlet filters may be provided within the airflow passage in the manner described in relation to the first embodiment.

The cartridge of the third embodiment is small and slim. It has a rectangular cross-section that is easy to hold and that fits easily into a user's pocket.

It should be clear that, although the examples described use a liquid aerosol-forming substrate, the same benefits can be realised in systems that use other forms of aerosol-forming substrate. An aerosol-forming substrate that is a solid or a gel at room temperature, may still release volatile components that condense into a liquid form in the atomising chamber. For example, the aerosol-forming substrate may be provided as a gel tablet. The aerosol-forming substrate may comprise particulate or cut tobacco.

It should also be clear that, although the examples describe the use of a resistive heating element to form an aerosol, the same principles and construction can be applied to systems that operate using different kinds of heating element, such as an inductively heated heating elements.

## Claims

1. An atomiser for an electrically heated aerosol-generating system, comprising:
an atomiser housing (31, 60) defining an air inlet (16, 67) and an air outlet (28, 68),
a reservoir portion (45, 66) for containing a liquid aerosol-forming substrate,
an airflow passage (22, 63) extending in a longitudinal direction between the air inlet (16, 67) and the air outlet (28, 68), the atomiser housing (31, 60) defining the reservoir portion (45, 66) and the airflow passage (22, 63),
a planar fluid-permeable heating element (32, 50) positioned between the airflow passage (22, 63) and the reservoir portion (45, 66) so that one side of the planar fluid-permeable heating element (32, 50) is in fluidic communication with the airflow passage (22, 63) and an opposite side of the planar fluid-permeable heating element (32, 50) is in fluidic communication with liquid in the reservoir portion (45, 66), wherein the planar fluid-permeable heating element (32, 50) extends in the longitudinal direction; and
a heater mounting portion (39, 52) on which the planar fluid-permeable heating element (32, 50) is supported, the heater mounting portion (39, 52) being received in the atomiser housing (31, 60) and positioned between the reservoir portion (45, 66) and the airflow passage (22, 63) so that fluid can pass from the reservoir portion (45, 66) to the airflow passage through the planar fluid-permeable heating element (32, 50);
wherein the heater mounting portion (39, 52) is press fit to the atomiser housing (31, 60) to partition the reservoir portion (45, 66) from the airflow passage (22, 63).

2. An atomiser according to claim 1, wherein the heater mounting portion (39, 52) is press fit to the atomiser housing (31, 60) in a direction orthogonal to the longitudinal axis.

3. An atomiser according to claim 1, wherein the atomiser housing (31, 60) comprises a bore (69) through which a heater mounting portion (51) can pass, and a lid (65) configured to seal the bore.

4. An atomiser according to claim 3, wherein the lid (65) can be depressed to ensure electrical connection of at least one electrical contact (64) with the fluid permeable heating element (32, 50).

5. An atomiser according to any one of the preceding claims, comprising a plurality of electrical contacts (64) positioned at an air inlet end of the atomiser and accessible from an exterior of the atomiser housing (31,60), the electrical contacts (64) being electrically connected or connectable to the planar fluid-permeable heating element (32, 50).

6. An atomiser according to any one of the preceding claims wherein the atomiser housing (31,60) is a one-piece component.

7. An atomiser according to any preceding claim, comprising an external housing (34, 62), wherein the atomiser housing (31, 60) is press fit or snap fit to the external housing (34, 62), the atomiser housing (31, 60) and external housing (34, 62) together enclosing a reservoir portion (45, 66) for containing liquid aerosol-forming substrate.

8. An atomiser according to claim 7, wherein the atomiser housing (31, 60) is press fit or snap fit to the external housing (34, 62) in the longitudinal direction.

9. An atomiser according to claim 7 or 8, wherein the external housing (34, 62) comprises a mouthpiece portion on which a user can puff to draw aerosol or vapour generated by the atomiser through the air outlet (28, 68).

10. An atomiser according to any one of the preceding claims, wherein the airflow passage (22, 63) extends in a straight line between the air inlet (16, 67) and the air outlet (28, 68).

11. An atomiser according to any one of the preceding claims, wherein the atomiser has a rectangular cross section orthogonal to the longitudinal direction.

12. An atomiser according to any one of the preceding claims, wherein the planar fluid permeable heating element (32, 50) is elongate and has a length and width and a thickness, the length being in the longitudinal direction and being greater than the width, and the width being greater than the thickness.

13. An electrically heated aerosol-generating system, comprising:
an atomiser according to any one of the preceding claims, and a device portion (10),
wherein the device portion (10) comprises a power supply and control circuitry connected to the power supply, and is engaged with the atomiser to allow for a supply of power from the power supply (12) to the planar fluid permeable heating element (32, 50).

14. An electrically heated aerosol-generating system according to claim 13, wherein the device portion (10) has a longitudinal axis aligned with the longitudinal direction.

15. An electrically heated aerosol-generating system according to claim 13 or 14, wherein the system comprises a mouthpiece on which a user can puff to draw aerosol or vapour generated by the atomiser through the air outlet (28, 68).

16. An electrically heated aerosol-generating system according claim 15, wherein the device portion (10) is configured to supply a first, non-zero, power to the heating element (32, 50), or to supply a power sufficient to maintain the heating element at a first temperature or within a first temperature range, between user puffs.

17. An electrically heated aerosol-generating system according to claim 16, wherein the device portion (10) is configured to supply a second power to the heating element (32, 50) during user puffs, wherein the second power is greater than the first power.

18. An electrically heated aerosol-generating system according to any one of claims 13 to 17, wherein the reservoir portion (45, 66) contains an aerosol-forming substrate comprising nicotine.

19. An electrically heated aerosol-generating system on which a user can puff to withdraw an aerosol, comprising:
an atomiser, and a device portion (10),
wherein the atomiser comprises:
an atomiser housing (31, 60) defining an air inlet (16, 67) and an air outlet (28, 68),
a reservoir portion (45, 66) for containing a liquid aerosol-forming substrate,
an airflow passage (22, 63) extending in a longitudinal direction between the air inlet (16, 67) and the air outlet (28, 68),
a planar fluid-permeable heating element (32, 50) positioned between the airflow passage (22, 63) and the reservoir portion (45, 66) so that one side of the planar fluid-permeable heating element (32, 50) is in fluidic communication with the airflow passage (22, 63) and an opposite side of the planar fluid-permeable heating element (32, 50) is in fluidic communication with liquid in the reservoir portion (45, 66), wherein the planar fluid permeable heating (32, 50) element is elongate and has a length and width and a thickness, the length being in the longitudinal direction and being greater than the width, and the width being greater than the thickness; and
a heater mounting portion (39, 52) on which the planar fluid-permeable heating element (32, 50) is supported, the heater mounting portion (39, 52) being received in the atomiser housing (31, 60) and positioned between the reservoir portion (45, 66) and the airflow passage (22, 63) so that fluid can pass from the reservoir portion (45, 66) to the airflow passage through the planar fluid-permeable heating element (32, 50); and
wherein the device portion (10) comprises a power supply (12) and control circuitry (14) connected to the power supply (12), and is engaged with the atomiser to allow for a supply of power from the power supply (12) to the planar fluid permeable heating element (32, 50), and wherein device portion (10) is configured to supply power to the heating element (32, 50) to supply a first power to the heating element (32, 50), or to supply a power sufficient to maintain at least the heating element (32, 50) at a first temperature or within a first temperature range, between user puffs;
wherein the heater mounting portion (39, 52) is press fit to the atomiser housing (31, 60) to partition the reservoir portion (45, 66) from the airflow passage (22, 63).

20. An electrically heated aerosol-generating system according to claim 19, wherein the device portion (10) is configured to supply a second power to the heating element during user puffs, wherein the second power is greater than the first power.

21. A cartridge for an aerosol-generating system, comprising:
an cartridge housing (34) defining an air inlet (16, 67) and an air outlet (28, 68), a reservoir portion,
an airflow passage (22, 63) extending in a longitudinal direction between the air inlet (16, 67) and the air outlet (28, 68), and
a heater assembly comprising a planar fluid-permeable heating element (32, 50), positioned between the airflow passage (22, 63) and the reservoir portion so that one side of the planar fluid-permeable heating element (32, 50) is in fluidic communication with the airflow passage (22, 63) and an opposite side of the planar fluid-permeable heating element (32, 50) is in fluidic communication with the reservoir portion; and
a heater mounting portion (39, 52) on which the planar fluid-permeable heating element (32, 50) is supported, the heater mounting portion (32, 50) being received in the cartridge housing (34) and positioned between the reservoir portion (45, 66) and the airflow passage (22, 63) so that fluid can pass from the reservoir portion (45, 66) to the airflow passage(22, 63) through the planar fluid-permeable heating element(32, 50); and
wherein the cartridge housing (34) comprises a wall extending in the longitudinal direction and comprises a bore (69) in the wall through which the heater assembly can be received.

## Patentansprüche

1. Zerstäuber für ein elektrisch erwärmtes Aerosolerzeugungssystem, umfassend:
ein Zerstäubergehäuse (31, 60), das einen Lufteinlass (16, 67) und einen Luftauslass (28, 68) definiert,
einen Vorratsbehälterabschnitt (45, 66) zur Aufnahme eines flüssigen aerosolbildenden Substrats,
einen Luftstromkanal (22, 63), der sich in einer Längsrichtung zwischen dem Lufteinlass (16, 67) und dem Luftauslass (28, 68) erstreckt, wobei das Zerstäubergehäuse (31, 60) den Vorratsbehälterabschnitt (45, 66) und den Luftstromkanal (22, 63) definiert,
ein planares, fluiddurchlässiges Heizelement (32, 50), das so zwischen dem Luftstromkanal (22, 63) und dem Vorratsbehälterabschnitt (45, 66) positioniert ist, dass eine Seite des planaren, fluiddurchlässigen Heizelements (32, 50) in Fluidverbindung mit dem Luftstromkanal (22, 63) steht und eine gegenüberliegende Seite des planaren, fluiddurchlässigen Heizelements (32, 50) in Fluidverbindung mit der Flüssigkeit in dem Vorratsbehälterabschnitt (45, 66) steht, wobei sich das planare, fluiddurchlässige Heizelement (32, 50) in der Längsrichtung erstreckt; und
einen Heizvorrichtungsanbringungsabschnitt (39, 52), auf dem das planare, fluiddurchlässige Heizelement (32, 50) gelagert ist, wobei der Heizvorrichtungsanbringungsabschnitt (39, 52) in dem Zerstäubergehäuse (31, 60) aufgenommen und zwischen dem Vorratsbehälterabschnitt (45, 66) und dem Luftstromkanal (22, 63) positioniert ist, sodass Fluid aus dem Vorratsbehälterabschnitt (45, 66) durch das planare, fluiddurchlässige Heizelement (32, 50) hindurch in den Luftstromkanal gelangen kann;
wobei der Heizvorrichtungsanbringungsabschnitt (39, 52) in das Zerstäubergehäuse (31, 60) eingepresst ist, sodass der Vorratsbehälterabschnitt (45, 66) von dem Luftstromkanal (22, 63) getrennt ist.

2. Zerstäuber nach Anspruch 1, wobei der Heizvorrichtungsanbringungsabschnitt (39, 52) in einer Richtung orthogonal zu der Längsachse in das Zerstäubergehäuse (31, 60) eingepresst ist.

3. Zerstäuber nach Anspruch 1, wobei das Zerstäubergehäuse (31, 60) eine Bohrung (69), durch die ein Heizvorrichtungsanbringungsabschnitt (51) hindurchtreten kann, und einen Deckel (65), der zum Verschließen der Bohrung ausgelegt ist, umfasst.

4. Zerstäuber nach Anspruch 3, wobei der Deckel (65) heruntergedrückt werden kann, um eine elektrische Verbindung von wenigstens einem elektrischen Kontakt (64) mit dem fluiddurchlässigen Heizelement (32, 50) sicherzustellen.

5. Zerstäuber nach einem der vorhergehenden Ansprüche, der eine Vielzahl von elektrischen Kontakten (64) umfasst, die an einem Lufteinlassende des Zerstäubers positioniert sind und von einer Außenseite des Zerstäubergehäuses (31, 60) zugänglich sind, wobei die elektrischen Kontakte (64) elektrisch mit dem ebenen, fluiddurchlässigen Heizelement (32, 50) verbunden oder verbindbar sind.

6. Zerstäuber nach einem der vorhergehenden Ansprüche, wobei das Zerstäubergehäuse (31, 60) ein einstückiges Bauteil ist.

7. Zerstäuber nach einem beliebigen vorhergehenden Anspruch, das ein äußeres Gehäuse (34, 62) umfasst, wobei das Zerstäubergehäuse (31, 60) in das äußere Gehäuse (34, 62) eingepresst oder damit eingerastet ist, wobei das Zerstäubergehäuse (31, 60) und das äußere Gehäuse (34, 62) zusammen einen Vorratsbehälterabschnitt (45, 66) zur Aufnahme eines flüssigen aerosolbildenden Substrats umschließen.

8. Zerstäuber nach Anspruch 7, wobei das Zerstäubergehäuse (31, 60) in der Längsrichtung in das äußere Gehäuse (34, 62) eingepresst oder damit eingerastet ist.

9. Zerstäuber nach Anspruch 7 oder 8, wobei das äußere Gehäuse (34, 62) einen Mundstückabschnitt umfasst, an dem ein Benutzer ziehen kann, um Aerosol oder Dampf, der durch den Zerstäuber erzeugt wird, durch den Luftauslass (28, 68) zu ziehen.

10. Zerstäuber nach einem der vorhergehenden Ansprüche, wobei sich der Luftstromkanal (22, 63) in einer geraden Linie zwischen dem Lufteinlass (16, 67) und dem Luftauslass (28, 68) erstreckt.

11. Zerstäuber nach einem der vorhergehenden Ansprüche, wobei der Zerstäuber einen rechteckigen Querschnitt orthogonal zu der Längsrichtung aufweist.

12. Zerstäuber nach einem der vorhergehenden Ansprüche, wobei das planare, fluiddurchlässige Heizelement (32, 50) länglich ist und eine Länge und Breite und eine Dicke aufweist, wobei die Länge in der Längsrichtung verläuft und größer als die Breite ist, und die Breite größer als die Dicke ist.

13. Elektrisch erwärmtes Aerosolerzeugungssystem, umfassend:
einen Zerstäuber nach einem der vorhergehenden Ansprüche und einen Vorrichtungsabschnitt (10),
wobei der Vorrichtungsabschnitt (10) eine Energieversorgung und eine mit der Energieversorgung verbundene Steuerschaltung umfasst und mit dem Zerstäuber in Eingriff ist, um eine Energiezufuhr von der Energieversorgung (12) zu dem planaren, fluiddurchlässigen Heizelement (32, 50) zu ermöglichen.

14. Elektrisch erwärmtes Aerosolerzeugungssystem nach Anspruch 13, wobei der Vorrichtungsabschnitt (10) eine Längsachse aufweist, die mit der Längsrichtung ausgerichtet ist.

15. Elektrisch erwärmtes Aerosolerzeugungssystem nach Anspruch 13 oder 14, wobei das System ein Mundstück umfasst, an dem ein Benutzer ziehen kann, um Aerosol oder Dampf, der durch den Zerstäuber erzeugt wird, durch den Luftauslass (28, 68) zu ziehen.

16. Elektrisch erwärmtes Aerosolerzeugungssystem nach Anspruch 15, wobei der Vorrichtungsabschnitt (10) so ausgelegt ist, dass er dem Heizelement (32, 50) eine erste, von Null verschiedene Energie zuführt, oder eine Energie zuführt, die ausreicht, um das Heizelement zwischen Zügen des Benutzers auf einer ersten Temperatur oder innerhalb eines ersten Temperaturbereichs zu halten.

17. Elektrisch erwärmtes Aerosolerzeugungssystem nach Anspruch 16, wobei der Vorrichtungsabschnitt (10) so ausgelegt ist, dass er dem Heizelement (32, 50) während Zügen des Benutzers eine zweite Energie zuführt, wobei die zweite Energie größer als die erste Energie ist.

18. Elektrisch erwärmtes Aerosolerzeugungssystem nach einem der Ansprüche 13 bis 17, wobei der Vorratsbehälterabschnitt (45, 66) ein aerosolbildendes Substrat enthält, das Nikotin umfasst.

19. Elektrisch erwärmtes Aerosolerzeugungssystem, an dem ein Benutzer ziehen kann, um ein Aerosol zu entnehmen, umfassend:
einen Zerstäuber und einen Vorrichtungsabschnitt (10),
wobei der Zerstäuber Folgendes umfasst:
ein Zerstäubergehäuse (31, 60), das einen Lufteinlass (16, 67) und einen Luftauslass (28, 68) definiert,
einen Vorratsbehälterabschnitt (45, 66) zur Aufnahme eines flüssigen aerosolbildenden Substrats,
einen Luftstromkanal (22, 63), der sich in einer Längsrichtung zwischen dem Lufteinlass (16, 67) und dem Luftauslass (28, 68) erstreckt,
ein planares, fluiddurchlässiges Heizelement (32, 50), das so zwischen dem Luftstromkanal (22, 63) und dem Vorratsbehälterabschnitt (45, 66) positioniert ist, dass eine Seite des planaren, fluiddurchlässigen Heizelements (32, 50) in Fluidverbindung mit dem Luftstromkanal (22, 63) steht und eine gegenüberliegende Seite des planaren, fluiddurchlässigen Heizelements (32, 50) in Fluidverbindung mit Flüssigkeit in dem Vorratsbehälterabschnitt (45, 66) steht, wobei das planare, fluiddurchlässige Heizelement (32, 50) länglich ist und eine Länge und Breite und eine Dicke aufweist, wobei die Länge in der Längsrichtung verläuft und größer als die Breite ist, und die Breite größer als die Dicke ist; und
einen Heizvorrichtungsanbringungsabschnitt (39, 52), auf dem das planare, fluiddurchlässige Heizelement (32, 50) gelagert ist, wobei der Heizvorrichtungsanbringungsabschnitt (39, 52) in dem Zerstäubergehäuse (31, 60) aufgenommen und zwischen dem Vorratsbehälterabschnitt (45, 66) und dem Luftstromkanal (22, 63) positioniert ist, sodass Fluid aus dem Vorratsbehälterabschnitt (45, 66) durch das planare, fluiddurchlässige Heizelement (32, 50) hindurch in den Luftstromkanal gelangen kann; und
wobei der Vorrichtungsabschnitt (10) eine Energieversorgung (12) und eine Steuerschaltung (14), die mit der Energieversorgung (12) verbunden ist, umfasst und mit dem Zerstäuber in Eingriff steht, um eine Energiezufuhr von der Energieversorgung (12) zu dem planaren, fluiddurchlässigen Heizelement (32, 50) zu ermöglichen, und wobei der Vorrichtungsabschnitt (10) dafür ausgelegt ist, dem Heizelement (32, 50) Energie zuzuführen, sodass dem Heizelement (32, 50) eine erste Energie zugeführt wird, oder eine Energie zugeführt wird, die ausreicht, um wenigstens das Heizelement (32, 50) zwischen Zügen des Benutzers auf einer ersten Temperatur oder innerhalb eines ersten Temperaturbereichs zu halten;
wobei der Heizvorrichtungsanbringungsabschnitt (39, 52) in das Zerstäubergehäuse (31, 60) eingepresst ist, sodass der Vorratsbehälterabschnitt (45, 66) von dem Luftstromkanal (22, 63) getrennt ist.

20. Elektrisch erwärmtes Aerosolerzeugungssystem nach Anspruch 19, wobei der Vorrichtungsabschnitt (10) so ausgelegt ist, dass er dem Heizelement während Zügen des Benutzers eine zweite Energie zuführt, wobei die zweite Energie größer als die erste Energie ist.

21. Patrone für ein Aerosolerzeugungssystem, umfassend:
ein Patronengehäuse (34), das einen Lufteinlass (16, 67) und einen Luftauslass (28, 68) definiert,
einen Vorratsbehälterabschnitt,
einen Luftstromkanal (22, 63), der sich in einer Längsrichtung zwischen dem Lufteinlass (16, 67) und dem Luftauslass (28, 68) erstreckt, und
eine Heizvorrichtungsbaugruppe, die ein planares, fluiddurchlässiges Heizelement (32, 50) umfasst, das so zwischen dem Luftstromkanal (22, 63) und dem Vorratsbehälterabschnitt positioniert ist, dass eine Seite des planaren, fluiddurchlässigen Heizelements (32, 50) in Fluidverbindung mit dem Luftstromkanal (22, 63) steht und eine gegenüberliegende Seite des planaren, fluiddurchlässigen Heizelements (32, 50) in Fluidverbindung mit dem Vorratsbehälterabschnitt steht; und
einen Heizvorrichtungsanbringungsabschnitt (39, 52), auf dem das planare, fluiddurchlässige Heizelement (32, 50) gelagert ist, wobei der Heizvorrichtungsanbringungsabschnitt (32, 50) in dem Patronengehäuse (34) aufgenommen und zwischen dem Vorratsbehälterabschnitt (45, 66) und dem Luftstromkanal (22, 63) positioniert ist, sodass Fluid aus dem Vorratsbehälterabschnitt (45, 66) durch das planare, fluiddurchlässige Heizelement (32, 50) hindurch in den Luftstromkanal (22, 63) gelangen kann; und
wobei das Patronengehäuse (34) eine Wand umfasst, die sich in der Längsrichtung erstreckt, und eine Bohrung (69) in der Wand umfasst, durch die die Heizvorrichtungsbaugruppe aufgenommen werden kann.

## Revendications

1. Atomiseur pour un système de génération d'aérosol chauffé électriquement comprenant :
un logement d'atomiseur (31, 60) définissant une entrée d'air (16, 67) et une sortie d'air (28, 68),
une portion réservoir (45, 66) destinée à contenir un substrat formant aérosol liquide,
un passage d'écoulement d'air (22, 63) s'étendant dans une direction longitudinale entre l'entrée d'air (16, 67) et la sortie d'air (28, 68), le logement d'atomiseur (31, 60) définissant la portion réservoir (45, 66) et le passage d'écoulement d'air (22, 63),
un élément de chauffage plan perméable aux fluides (32, 50) positionné entre le passage d'écoulement d'air (22, 63) et la portion réservoir (45, 66) de sorte qu'un côté de l'élément de chauffage plan perméable aux fluides (32, 50) est en communication fluidique avec le passage d'écoulement d'air (22, 63) et un côté opposé de l'élément de chauffage plan perméable aux fluides (32, 50) est en communication fluidique avec le liquide dans la portion réservoir (45, 66), dans lequel l'élément de chauffage plan perméable aux fluides (32, 50) s'étend dans la direction longitudinale ; et
une portion de montage de dispositif de chauffage (39, 52) sur laquelle l'élément de chauffage plan perméable aux fluides (32, 50) est supporté, la portion de montage de dispositif de chauffage (39, 52) étant reçue dans le logement d'atomiseur (31, 60) et positionnée entre la portion réservoir (45, 66) et le passage d'écoulement d'air (22, 63) de sorte que le fluide peut passer de la portion réservoir (45, 66) au passage d'écoulement d'air à travers l'élément de chauffage plan perméable aux fluides (32, 50) ;
dans lequel la portion de montage de dispositif de chauffage (39, 52) est ajustée par pression sur le logement d'atomiseur (31, 60) pour séparer la portion réservoir (45, 66) du passage d'écoulement d'air (22, 63).

2. Atomiseur selon la revendication 1, dans lequel la portion de montage de dispositif de chauffage (39, 52) est ajustée par pression sur le logement d'atomiseur (31, 60) dans une direction orthogonale à l'axe longitudinal.

3. Atomiseur selon la revendication 1, dans lequel le logement d'atomiseur (31, 60) comprend un alésage (69) à travers lequel une portion de montage de dispositif de chauffage (51) peut passer, et un couvercle (65) configuré pour rendre étanche l'alésage.

4. Atomiseur selon la revendication 3, dans lequel le couvercle (65) peut être enfoncé pour assurer le raccordement électrique d'au moins un contact électrique (64) avec l'élément de chauffage perméable aux fluides (32, 50).

5. Atomiseur selon l'une quelconque des revendications précédentes, comprenant une pluralité de contacts électriques (64) positionnés au niveau d'une extrémité d'entrée d'air de l'atomiseur et accessibles depuis l'extérieur du logement d'atomiseur (31, 60), les contacts électriques (64) étant raccordés ou pouvant être raccordés électriquement à l'élément de chauffage plan perméable aux fluides (32, 50).

6. Atomiseur selon l'une quelconque des revendications précédentes, dans lequel le logement d'atomiseur (31, 60) est un composant monobloc.

7. Atomiseur selon une quelconque revendication précédente, comprenant un logement externe (34, 62), dans lequel le logement d'atomiseur (31, 60) est ajusté par pression ou par encliquetage sur le logement externe (34, 62), le logement d'atomiseur (31, 60) et le logement externe (34, 62) enfermant ensemble une portion réservoir (45, 66) pour contenir un substrat formant aérosol liquide.

8. Atomiseur selon la revendication 7, dans lequel le logement d'atomiseur (31, 60) est ajusté par pression ou par encliquetage sur le logement externe (34, 62) dans la direction longitudinale.

9. Atomiseur selon la revendication 7 ou 8, dans lequel le logement externe (34, 62) comprend une portion d'embout buccal sur laquelle un utilisateur peut prendre des bouffées pour tirer l'aérosol ou la vapeur générée par l'atomiseur à travers la sortie d'air (28, 68).

10. Atomiseur selon l'une quelconque des revendications précédentes, dans lequel le passage d'écoulement d'air (22, 63) s'étend en ligne droite entre l'entrée d'air (16, 67) et la sortie d'air (28, 68).

11. Atomiseur selon l'une quelconque des revendications précédentes, dans lequel l'atomiseur présente une coupe transversale rectangulaire orthogonale à la direction longitudinale.

12. Atomiseur selon l'une quelconque des revendications précédentes, dans lequel, l'élément de chauffage plan perméable aux fluides (32, 50) est allongé et présente une longueur et une largeur et une épaisseur, la longueur étant dans la direction longitudinale et étant supérieure à la largeur, et la largeur étant supérieure à l'épaisseur.

13. Système de génération d'aérosol chauffé électriquement comprenant :
un atomiseur selon l'une quelconque des revendications précédentes, et une portion dispositif (10),
dans lequel la portion dispositif (10) comprend une alimentation électrique et une circuiterie de commande raccordée à l'alimentation électrique, et vient en prise avec l'atomiseur pour permettre une alimentation en puissance de l'élément de chauffage plan perméable aux fluides (32, 50) à partir de l'alimentation électrique (12).

14. Système de génération d'aérosol chauffé électriquement selon la revendication 13, dans lequel la portion dispositif (10) présente un axe longitudinal aligné avec la direction longitudinale.

15. Système de génération d'aérosol chauffé électriquement selon la revendication 13 ou 14, dans lequel le système comprend un embout buccal sur lequel un utilisateur peut prendre des bouffées pour tirer l'aérosol ou la vapeur générée par l'atomiseur à travers la sortie d'air (28, 68).

16. Système de génération d'aérosol chauffé électriquement selon la revendication 15, dans lequel la portion dispositif (10) est configurée pour alimenter une première puissance non nulle à l'élément de chauffage (32, 50), ou pour alimenter une puissance suffisante pour maintenir l'élément de chauffage à une première température ou dans une première plage de températures, entre des bouffées d'utilisateur.

17. Système de génération d'aérosol chauffé électriquement selon la revendication 16, dans lequel la portion dispositif (10) est configurée pour alimenter une deuxième puissance à l'élément de chauffage (32, 50) pendant les bouffées d'utilisateur, dans lequel la deuxième puissance est supérieure à la première puissance.

18. Système de génération d'aérosol chauffé électriquement selon l'une quelconque des revendications 13 à 17, dans lequel la portion réservoir (45, 66) contient un substrat formant aérosol comprenant de la nicotine.

19. Système de génération d'aérosol chauffé électriquement sur lequel un utilisateur peut prendre des bouffées pour aspirer un aérosol, comprenant :
un atomiseur, et une portion dispositif (10),
dans lequel l'atomiseur comprend :
un logement d'atomiseur (31, 60) définissant une entrée d'air (16, 67) et une sortie d'air (28, 68),
une portion réservoir (45, 66) destinée à contenir un substrat formant aérosol liquide,
un passage d'écoulement d'air (22, 63) s'étendant dans une direction longitudinale entre l'entrée d'air (16, 67) et la sortie d'air (28, 68),
un élément de chauffage plan perméable aux fluides (32, 50) positionné entre le passage d'écoulement d'air (22, 63) et la portion réservoir (45, 66) de sorte qu'un côté de l'élément de chauffage plan perméable aux fluides (32, 50) est en communication fluidique avec le passage d'écoulement d'air (22, 63) et un côté opposé de l'élément de chauffage plan perméable aux fluides (32, 50) est en communication fluidique avec le liquide dans la portion réservoir (45, 66), dans lequel, l'élément de chauffage plan perméable aux fluides (32, 50) est allongé et présente une longueur et largeur et une épaisseur, la longueur étant dans la direction longitudinale et étant supérieure à la largeur, et la largeur étant supérieure à l'épaisseur ; et
une portion de montage de dispositif de chauffage (39, 52) sur laquelle l'élément de chauffage plan perméable aux fluides (32, 50) est supporté, la portion de montage de dispositif de chauffage (39, 52) étant reçue dans le logement d'atomiseur (31, 60) et positionnée entre la portion réservoir (45, 66) et le passage d'écoulement d'air (22, 63) de sorte que le fluide peut passer de la portion réservoir (45, 66) au passage d'écoulement d'air à travers l'élément de chauffage plan perméable aux fluides (32, 50) ; et
dans lequel la portion dispositif (10) comprend une alimentation électrique (12) et une circuiterie de commande (14) raccordée à l'alimentation électrique (12), et vient en contact avec l'atomiseur pour permettre une alimentation électrique de l'élément de chauffage plan perméable aux fluides (32, 50) à partir de l'alimentation électrique (12), et dans lequel la portion dispositif (10) est configurée pour alimenter en puissance l'élément de chauffage (32, 50) pour alimenter une première puissance vers l'élément de chauffage (32, 50), ou pour alimenter une puissance suffisante pour maintenir l'élément de chauffage (32, 50) à une première température ou dans une première plage de températures, entre des bouffées d'utilisateur ;
dans lequel la portion de montage de dispositif de chauffage (39, 52) est ajustée par pression sur le logement d'atomiseur (31, 60) pour séparer la portion réservoir (45, 66) du passage d'écoulement d'air (22, 63).

20. Système de génération d'aérosol chauffé électriquement selon la revendication 19, dans lequel la portion dispositif (10) est configurée pour alimenter une deuxième puissance à l'élément de chauffage pendant les bouffées d'utilisateur, dans lequel la deuxième puissance est supérieure à la première puissance.

21. Cartouche pour un système de génération d'aérosol, comprenant :
un logement de cartouche (34) définissant une entrée d'air (16, 67) et une sortie d'air (28, 68),
une portion réservoir,
un passage d'écoulement d'air (22, 63) s'étendant dans une direction longitudinale entre l'entrée d'air (16, 67) et la sortie d'air (28, 68), et
un ensemble de chauffage comprenant un élément de chauffage plan perméable aux fluides (32, 50), positionné entre le passage d'écoulement d'air (22, 63) et la portion réservoir de sorte qu'un côté de l'élément de chauffage plan perméable aux fluides (32, 50) est en communication fluidique avec le passage d'écoulement d'air (22, 63) et un côté opposé de l'élément de chauffage plan perméable aux fluides (32, 50) est en communication fluidique avec la portion réservoir ; et
une portion de montage de dispositif de chauffage (39, 52) sur laquelle l'élément de chauffage plan perméable aux fluides (32, 50) est supporté, la portion de montage de dispositif de chauffage (32, 50) étant reçue dans le logement de cartouche (34) et positionnée entre la portion réservoir (45, 66) et le passage d'écoulement d'air (22, 63) de sorte que le fluide peut passer de la portion réservoir (45, 66) au passage d'écoulement d'air (22, 63) à travers l'élément de chauffage plan perméable aux fluides (32, 50) ; et
dans lequel le logement de cartouche (34) comprend une paroi s'étendant dans la direction longitudinale et comprend un alésage (69) dans la paroi à travers lequel l'ensemble de chauffage peut être reçu.
